# EUROPEAN PATENT APPLICATION

(11) **EP 3 699 831 A1**
(43) Date of publication of application: **26.08.2020**
(21) Application number: 20154302.2
(22) Date of filing: 29.01.2020
(51) Int. Cl.: G06Q 10/00, F25B 49/00, F25D 11/00, G06Q 10/06

(54) **MAINTENANCE INSPECTION METHOD, MAINTENANCE INSPECTION SYSTEM, AND INFORMATION TERMINAL**

(30) Priority: 20.02.2019 JP 2019028298
(71) Applicant: Panasonic Intellectual Property Management Co., Ltd., Osaka-shi, Osaka 540-6207 (JP)
(72) Inventor: TAMURA, Takashi, Osaka, 540-6207 (JP); OHIRA, Yuki, Osaka, 540-6207 (JP)
(74) Representative: Eisenführ Speiser

(57) **Abstract**

To be able to prevent mismatching between content of abnormality and a person to deal with maintenance thereof when the abnormality is generated and to efficiently deal with the abnormality. It is determined whether a cause of abnormality of a cooling device (4) is breakdown of the cooling device (4) or a temporal cause based on in-storage-area temperature information of the cooling device (4) acquired from the cooling device (4) via a network (13) and related information acquired from a related information acquiring apparatus (9) via the network and, when determined as being the temporal cause, a screen display of work for solving the temporal cause is provided for a shop user terminal (10).

## Description

### BACKGROUND OF THE INVENTION

### Field of the Invention

The present invention relates to a maintenance inspection method, a maintenance inspection system, and an information terminal.

### Description of the Related Art

When a cooling device breaks down, it is repaired by a professional maintenance worker (for example, a service engineer). Therefore, when it is suspected that there is something abnormal generated in a cooling device, the user of the cooling device (for example, an employee of a shop) requests a professional maintenance worker to investigate abnormality generated in the cooling device as necessary. The professional maintenance worker performs investigation and repairs the device. However, there may be a case where the cause of the abnormality is not a breakdown of the cooling device but a temporal one that is caused because of the way it is operated (for example, a case where an inlet of a showcase is covered with commodities, paper for advertisement, price tags, or the like).

Further, Patent Literature 1 discloses a shop maintenance system which, when abnormality (error) is generated in the cooling device, enables an employee who is inexperienced in doing maintenance to immediately deal with the error by using a tablet terminal.

In Patent Literature 1, it is described that "the shop maintenance system includes a tablet terminal that receives alarm information regarding an error generated in a device provided in a shop, in which the tablet terminal: includes a storage unit that stores maintenance information including a method for dealing with the error generated in the device, a display unit, and an input unit; and upon receiving the alarm information, provides a predetermined alarm notification on the display unit and displays the method for dealing with the generated error on the display unit".

### Citation List

### Patent Literature

Patent Literature 1: Japanese Patent Application Laid-Open No. 2017-133787

However, the user of the cooling device cannot determine the cause of the abnormality of the cooling device. Therefore, it may happen that the user of the cooling device requests the maintenance worker to make an investigation even when repairing is unnecessary. In such case, the user of the cooling device comes to deal with the work and expenditure which are supposed to be unnecessary, such as making a request for investigation and paying the cost for the investigation. Further, the maintenance worker spends the time for travelling that requires no repairing, thereby decreasing the time that can be spent for repair work. With a conventional system, there may be a mismatch generated between content of abnormality and the person dealing with the maintenance so that it may become inefficient when dealing with the generated abnormality.

The object of the present invention is to provide a maintenance inspection method, a maintenance inspection system, and an information terminal capable of preventing a mismatch between content of abnormality and the person dealing with the maintenance when the abnormality is generated and capable of efficiently dealing with the abnormality.

### SUMMARY OF THE INVENTION

The present invention is a maintenance inspection method used in a maintenance inspection system which is connected, via a network, to cooling devices each including a first sensor that acquires measurement information including at least in-storage-area temperature information, to a first terminal apparatus displaying information of the cooling devices, and to a second terminal apparatus including a second sensor that acquires information from the cooling devices, and which conducts a maintenance inspection of the cooling devices by using a computer, and the maintenance inspection method includes: determining whether or not a cause of abnormality generated in the cooling device is breakdown of the cooling device or a temporal cause based on the in-storage-area temperature information, of the cooling device, acquired from the cooling device via the network and related information, regarding the cooling device, different from the in-storage-area temperature information, of the cooling device, acquired from the second terminal apparatus via the network; and when determined as the temporal cause, providing, for the first terminal apparatus, a screen display of work for solving the temporal cause via the network.

With the present invention, it is possible to prevent a mismatch between content of abnormality and the person dealing with the maintenance when the abnormality is generated and to efficiently deal with the abnormality.

### BRIEF DESCRIPTION OF THE DRAWINGS

Fig. 1 is a diagram showing a configuration of a cooling device management system according to an embodiment of the present invention;
Fig. 2 is a block diagram showing a functional configuration of a cooling device;
Fig. 3 is a block diagram showing a functional configuration of a shop apparatus;
Fig. 4 is a block diagram showing a functional configuration of a related information acquiring apparatus;
Fig. 5 is a block diagram showing a functional configuration of a shop user terminal apparatus;

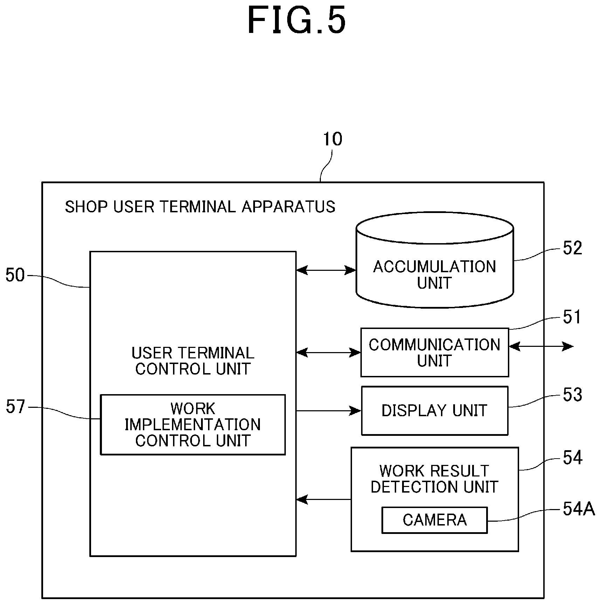

Fig. 5 is a block diagram showing a functional configuration of an engineer terminal apparatus;

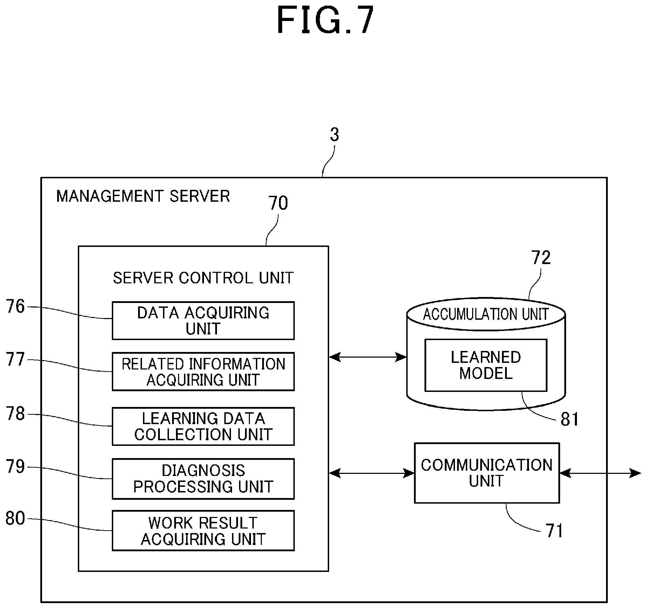

Fig. 7 is a block diagram showing a functional configuration of a management server;

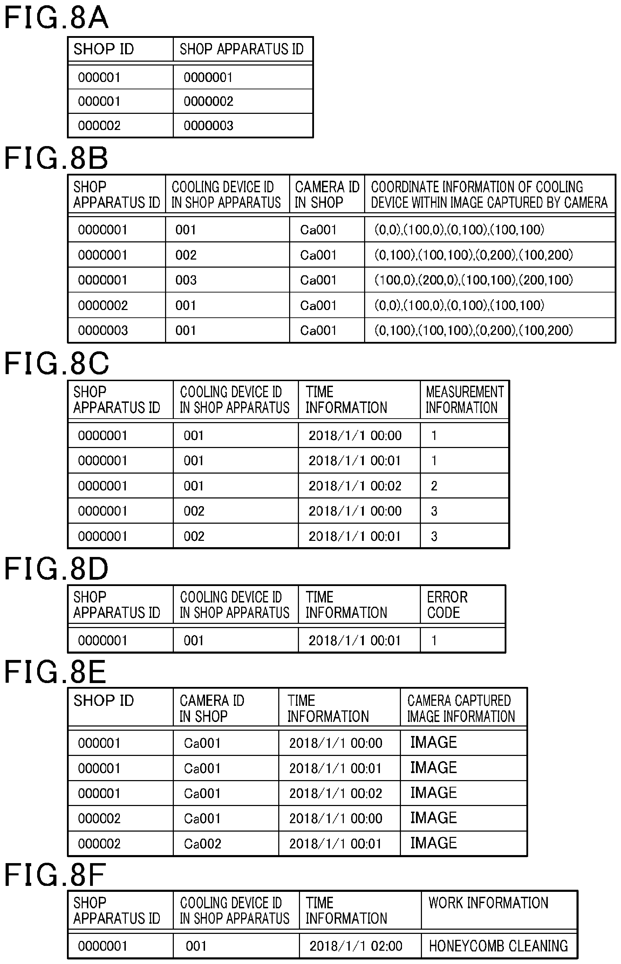

Figs. 8 are diagrams showing examples of configurations of various kinds of data accumulated in an accumulation unit of the management server, in which Fig. 8A is a diagram showing a list of shop apparatuses in shops managed by the management server, Fig. 8B is a diagram showing a list of corresponding relation between cooling devices managed in the shop apparatuses and the related information acquiring apparatuses, Fig. 8C is a diagram showing a configuration of operation data acquired by a data acquiring unit from cooling devices 4 via the shop apparatus, Fig. 8D is a diagram showing a configuration of alarm data acquired by the data acquiring unit from the cooling device via the shop apparatus, Fig. 8E is a diagram showing a configuration of related information data acquired by the related information acquiring unit from a related information acquiring apparatus, and Fig. 8F is a diagram showing a configuration of work report data acquired by a work result acquiring unit from the shop user terminal apparatus;

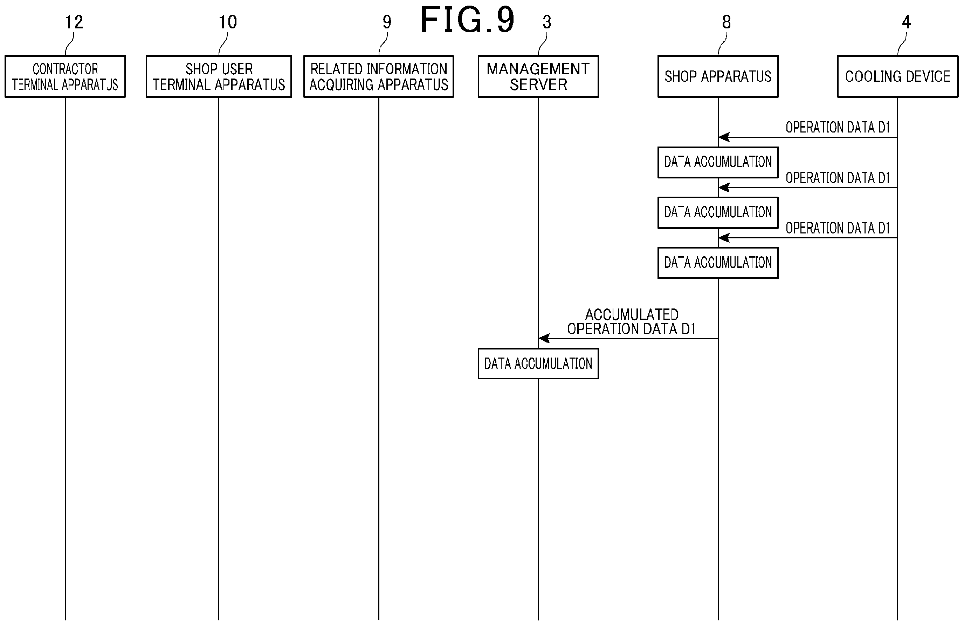

Fig. 9 is a sequence chart of the cooling device management system in a case where there is no abnormality generated in the cooling device;

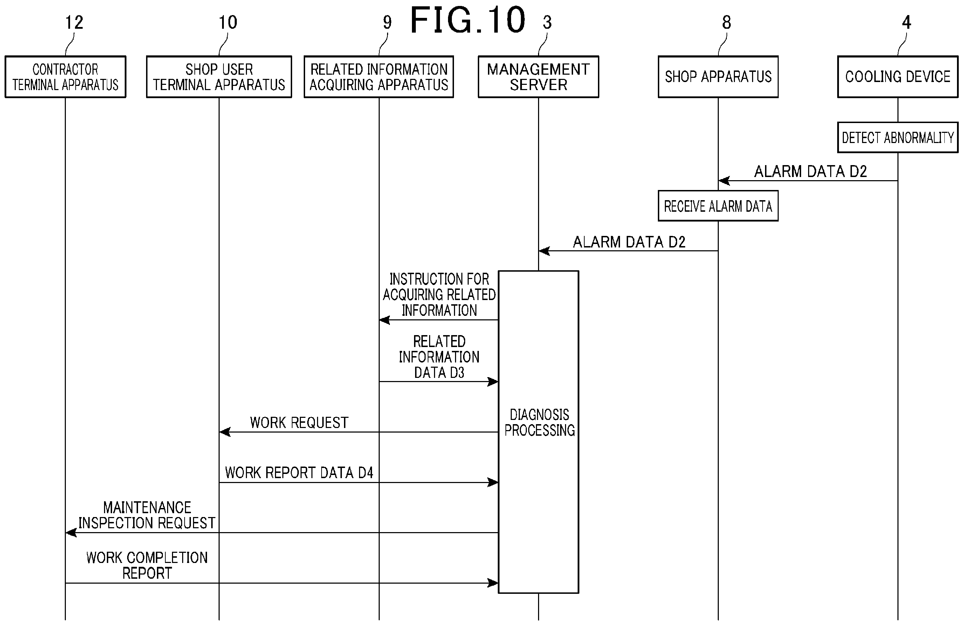

Fig. 10 is a sequence chart of the cooling device management system in a case where there is abnormality generated in the cooling device;

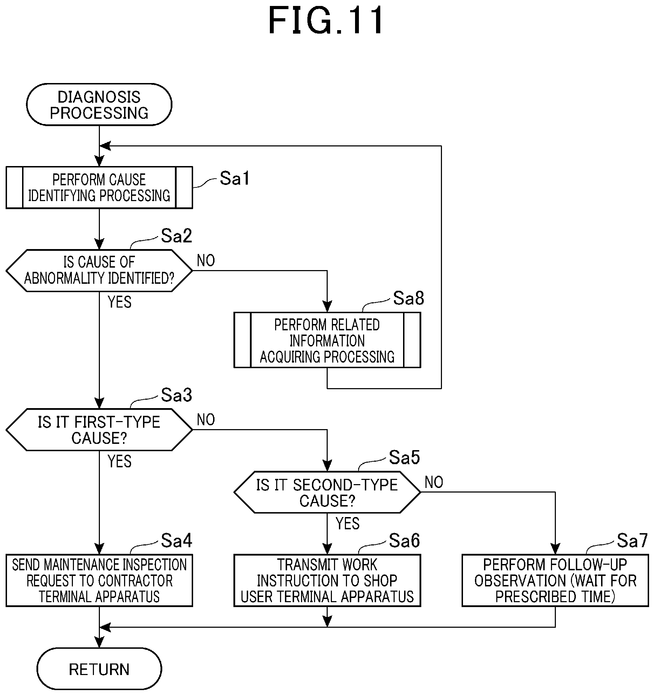

Fig. 11 is a flowchart of diagnosis processing;

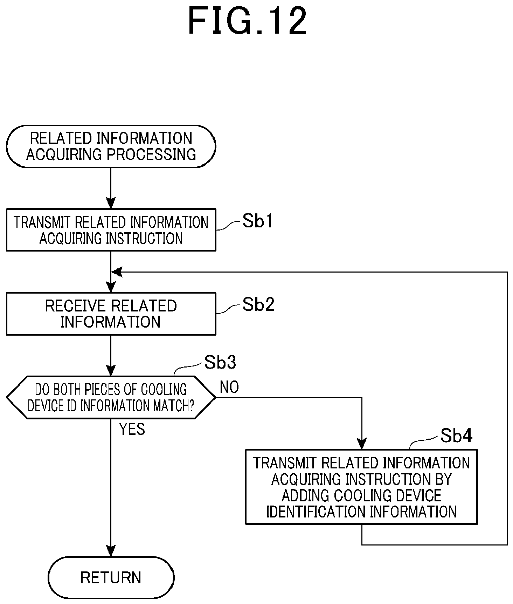

Fig. 12 is a flowchart of related information acquiring processing;

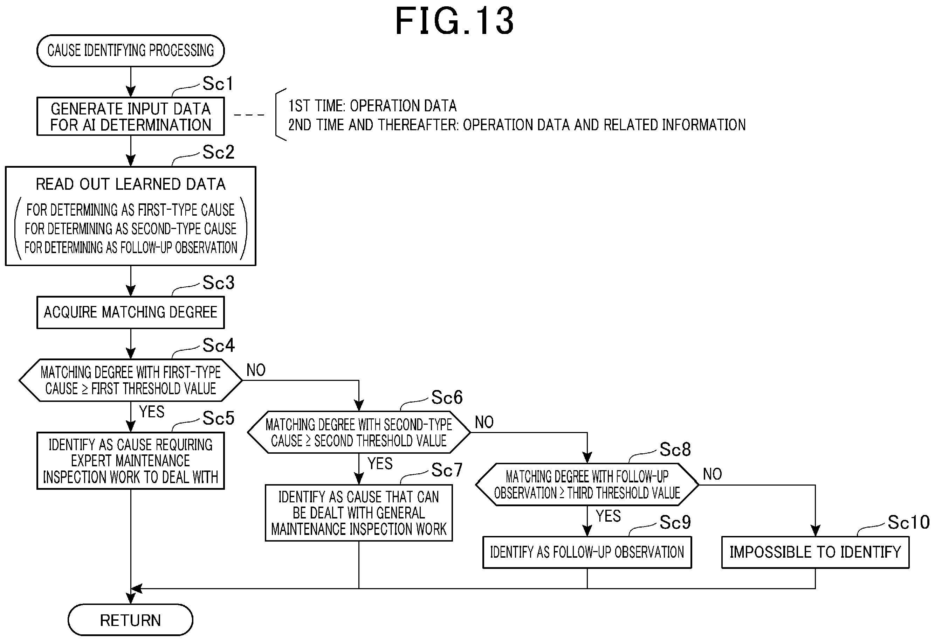

Fig. 13 is a flowchart of cause identification processing; and

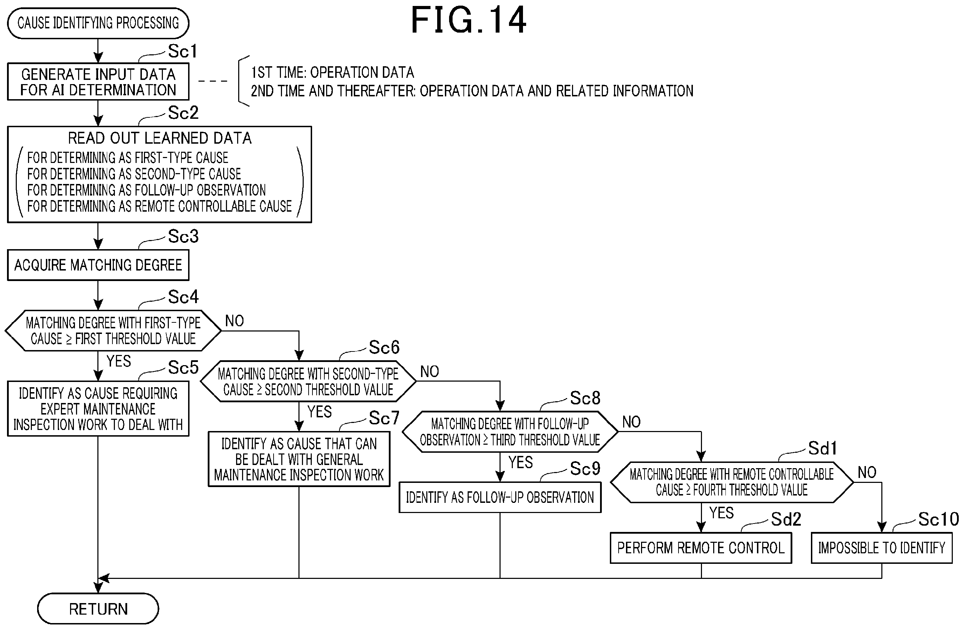

Fig. 14 is a flowchart of cause identification processing according to a modification example of the present invention.

### DETAILED DESCRIPTION OF THE PREFERRED EMBODIMENTS

The first invention is a maintenance inspection method used in a maintenance inspection system which is connected, via a network, to cooling devices each including a first sensor that acquires measurement information including at least in-storage-area temperature information, to a first terminal apparatus displaying information of the cooling devices, and to a second terminal apparatus including a second sensor that acquires information from the cooling devices, and which conducts a maintenance inspection of the cooling devices by using a computer, and the maintenance inspection method includes: determining whether or not a cause of abnormality generated in the cooling device is breakdown of the cooling device or a temporal cause based on the in-storage-area temperature information, of the cooling device, acquired from the cooling device via the network and related information, regarding the cooling device, different from the in-storage-area temperature information, of the cooling device, acquired from the second terminal apparatus via the network; and when determined as the temporal cause, providing, for the first terminal apparatus, a screen display of work for solving the temporal cause via the network.

This makes it possible to allow an appropriate person to perform appropriate work for the cause of abnormality when the abnormality is generated in the cooling device, so that it is possible to efficiently deal with the abnormality. For example, for the user such as an employee of a shop, only the work that can be performed without requiring expertise for the cooling device is instructed for dealing with the cause and no work requiring expertise is instructed to perform. Therefore, even when the user has no expertise regarding the cooling device and inexperienced in doing maintenance thereof, appropriate work for the cause of abnormality can be conducted.

The second invention is the maintenance inspection method according to the first invention, which includes providing, for the first terminal apparatus, a screen display for encouraging acquisition of the related information, when it is not possible to identify whether the cause of the abnormality of the cooling device is the breakdown of the cooling device or the temporal cause based on the in-storage-area temperature information acquired from the cooling device via the network.

This makes it possible to easily identify the cause of abnormality and to perform appropriate work by the appropriate person for the cause of abnormality, so that the abnormality can be efficiently dealt with.

The third invention is the maintenance inspection method according to the first or second invention, which includes turning off an in-storage-area lighting of the cooling device when the abnormality is generated in the cooling device.

This makes it easier to identify the cooling device having abnormality.

The fourth invention is the maintenance inspection method according to any one of the first to third inventions, which includes, when determined that a cause of an increase in in-storage-area temperature of the cooling device is the breakdown of the cooling device, transmitting a request for dealing with the abnormality to a contractor that provides a maintenance inspection service via the network.

This makes it possible to have not the user but the contractor conduct appropriate work when expertise regarding the cooling device is required for dealing with the cause of abnormality of the cooling device.

The fifth invention is the maintenance inspection method according to the first invention, wherein each of the cooling devices includes an ID transmitter that transmits ID information of the respective cooling device to the second terminal apparatus without using the network, and the maintenance inspection method includes: comparing the ID information acquired by the second terminal apparatus from the ID transmitter with ID information acquired from the cooling device via the network; and determining whether or not the cooling device whose related information is acquired by the second terminal apparatus is the cooling device having the abnormality.

This makes it possible to prevent the related information of the cooling device having no abnormality from being used for making determination using the related information.

The sixth invention is the maintenance inspection method according to the fifth invention, wherein the ID transmitter transmits the ID information by at least one of a QR code, a beacon, and an optical ID.

Thereby, the ID information can be transmitted to the second terminal apparatus by a method other than having communication via the network.

The seventh invention is the maintenance inspection method according to the fifth or sixth invention, which includes, when the ID information acquired by the second terminal apparatus from the ID transmitter does not match the ID information acquired from the cooling device via the network, transmitting to the first terminal apparatus or the second terminal apparatus that the cooling device whose related information is acquired by the second terminal apparatus is not the cooling device having the abnormality.

Thereby, it is notified that the second terminal apparatus has acquired the related information from the cooling device having no abnormality, so that the user or the second terminal apparatus itself can reacquire the related information.

The eighth invention is the maintenance inspection method according to any one of the fifth to seventh invention, which includes, when the ID information acquired by the second terminal apparatus from the ID transmitter does not match the ID information acquired from the cooling device via the network, transmitting information for identifying the cooling device having the abnormality to the first terminal apparatus or the second terminal apparatus via the network.

This makes it possible to securely acquire the related information from the cooling device having the abnormality by the second terminal apparatus.

The ninth invention is the maintenance inspection method according to any one of the first to eighth inventions, wherein the related information is captured image information, of a cool air outlet, a cool air inlet, an evaporator, a honeycomb, a filter of the cooling device, or a peripheral region including at least one of those components, captured by a camera.

By acquiring such related information, it is possible to accurately identify whether or not the cause of abnormality is the cause that requires no expertise regarding the cooling device to deal with.

The tenth invention is the maintenance inspection method according to the ninth invention, wherein work for solving the temporal cause is cleaning of at least one of the cool air outlet, the honeycomb, the filter, and the peripheral region or removal of foreign matters at least from one of the cool air inlet and the peripheral region.

This makes it possible to have the user having no expertise regarding the cooling device and inexperienced in doing the maintenance thereof perform only the work suited for such user.

The eleventh invention is the maintenance inspection method according to any one of the first to eighth inventions, wherein the related information acquired from the second terminal apparatus is collected sound information, of a fan or a compressor of the cooling device, collected by a microphone.

By acquiring such related information, it is possible to accurately identify whether or not the cause of abnormality is the abnormality generated in the fan or the compressor requiring expertise regarding the cooling device to deal with.

The twelfth invention is the maintenance inspection method according to any one of the first to eighth inventions, wherein the related information acquired from the second terminal apparatus is vibration information, of a compressor of the cooling device, acquired by an accelerometer.

By acquiring such related information, it is possible to accurately identify whether or not the cause of abnormality is the abnormality generated in the compressor requiring expertise regarding the cooling device to deal with.

The thirteenth invention is the maintenance inspection method according to the first invention, which includes, when determined that the cause of the abnormality of the cooling device is formation of frost in an evaporator based on the in-storage-area temperature information, of the cooling device, acquired from the cooling device and a captured image, of the evaporator of the cooling device, captured by a camera, acquired from the second terminal apparatus, causing the cooling device to execute defrosting of the evaporator.

Thereby, the in-storage-area temperature abnormality caused by formation of frost can be appropriately dealt with by having the cooling device execute defrosting without having the user conduct any work.

The fourteenth invention is the maintenance inspection method according to any one of the first to thirteenth inventions, wherein: the first terminal apparatus is a portable mobile terminal; and the second terminal apparatus is an information acquiring apparatus provided in a shop where the cooling devices are disposed or provided for each of the cooling devices.

This makes it possible to acquire the related information without having the user conduct any work so that the number of times of the work conducted by the user can be decreased. Further, because the first terminal apparatus is a portable mobile terminal, the user can perform the work while operating the first terminal apparatus near the cooling device as the work subject.

The fifteenth invention is the maintenance inspection method according to any one of first to thirteenth inventions, wherein the first terminal apparatus and the second terminal apparatus are one and same portable mobile terminal.

This makes it possible to suppress the cost for the apparatuses of the cooling device management system. Further, the first terminal apparatus that is a portable mobile terminal also functions as the second terminal apparatus, so that it is possible for the user to carry the first mobile terminal apparatus to the cooling device having the abnormality and securely acquire the related information from the cooling device regardless of the disposed places of each of the cooling devices.

The sixteenth invention is maintenance inspection system which is connected, via a network, to cooling devices each including a first sensor that acquires measurement information including at least in-storage-area temperature information, to a first terminal apparatus displaying information of the cooling devices, and to a second terminal apparatus including a second sensor that acquires information from the cooling devices, and which conducts maintenance inspection of the cooling device by using a computer, wherein whether or not a cause of abnormality of the cooling device is breakdown of the cooling device or a temporal cause is determined based on the in-storage-area temperature information, of the cooling device, acquired from the cooling device via the network and related information, regarding the cooling device, different from the in-storage-area temperature information, of the cooling device, acquired from the second terminal apparatus via the network; and when determined as the temporal cause, a screen display of work for solving the temporal cause is provided for the first terminal apparatus via the network.

The sixteenth invention achieves the same effect as that of the first invention.

The seventeenth invention is an information terminal used in the maintenance inspection system according to the sixteenth invention.

The seventeenth invention achieves the same effect as that of the first invention.

Hereinafter, an embodiment of the present invention will be described by referring to the accompanying drawings.

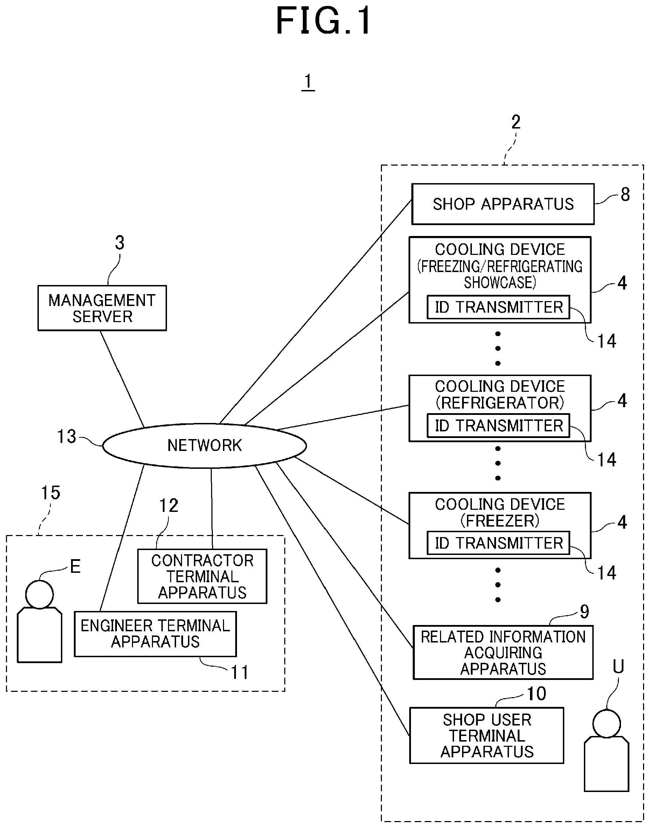

Fig. 1 is a diagram showing a configuration of a cooling device management system 1 according to the embodiment.

The cooling device management system 1 is a system that includes a management server 3 and manages cooling devices 4 placed at a shop such as a supermarket or a convenience store by using the management server 3.

The cooling device 4 is a general name used for a refrigerating device and a freezing device. In the embodiment, a single or a plurality of freezing/refrigerating showcase, a single or a plurality of refrigerator, and a single or a plurality of freezer are disposed as cooling devices in the shop 2. Those cooling devices 4 are placed outside of the shop 2, receive supply of a refrigerant via a refrigerant pipe from a freezing machine including a compressor, and cool articles such as commodities housed in each of the devices. Note that the freezing machine may be placed in a machine room inside the shop or may be included in the cooling devices 4.

Further, a shop apparatus 8 for enabling a shop user U such as the owner of the shop, an employee, or the like to be the user of the cooling deices 4 to manage each of the cooling devices 4 is placed in the shop 2 and connected to a network 13 for making it possible to communicate with each of the cooling devices 4 and the management server 3. The shop apparatus 8 acquires operation data D1 (see Fig. 9) regarding the operation state from each of the cooling devices 4 and transmits the operation data D1 to the management server 3. Then, the management server 3 performs various kinds of management of the cooling devices 4 by using the operation data D1.

Note here that the cooling device management system 1 according to the embodiment also functions as a maintenance inspection system that manages maintenance inspections of the cooling devices 4. That is, the management server 3 has a function of diagnosing abnormality in actions of the cooling device 4 and a function of sending a maintenance inspection service request (hereinafter, referred to as "maintenance inspection request") for dealing with the abnormality to a maintenance inspection service provider 15.

The maintenance inspection service provider 15 is a contractor who provides a maintenance inspection service of the cooling devices 4. A contractor terminal apparatus 12 and an engineer terminal apparatus 11 for receiving a maintenance inspection request from the management server 3 via the network 13 are provided.

The contractor terminal apparatus 12 is a communication terminal that is formed to be communicable with the management server 3 via the network 13, and receives the maintenance inspection request from the management server 3.

Further, many service engineers E belong to the maintenance inspection service provider 15. The service engineers E are workers who have expertise on the cooling devices 4 and conduct maintenance inspection work of the cooling devices 4. The engineer terminal apparatus 11 is an information communication terminal used by the service engineer E when performing the maintenance inspection work and provides the service engineer E with various kinds of tools for supporting the maintenance inspection work.

Then, when a maintenance inspection request is sent from the management server 3 and received by the contractor terminal apparatus 12, the service engineer E visits the shop 2 and conducts the maintenance inspection work for the cooling device 4 by using the engineer terminal apparatus 11 to solve the abnormality generated in the cooling device 4.

Note here that there is maintenance inspection work for solving abnormality, which can be performed not only by the service engineer E but also by the shop user U that has no expertise.

In more detail, maintenance inspection work such as cleaning work that is accompanied by disassembly of the cooling device 4 ("thorough cleaning"), part replacement, and repairing requires expertise regarding the cooling device 4, so that it is appropriate to perform such work not by the shop user U but by the service engineer E.

Meanwhile, it is unnecessary to have expertise regarding the cooling device 4 for performing maintenance inspection work not requiring disassembly, part replacement, and repairing, so that even the shop user U can appropriately perform such maintenance inspection work.

Hereinafter, the maintenance inspection work requiring expertise for performing the work is referred to as "expert maintenance inspection work", and the maintenance inspection work requiring no expertise is referred to as "general maintenance inspection work".

Specific examples of the general maintenance inspection work may be as follows. That is, the examples may be work for cleaning each component inside the device such as a cool air outlet and a cool air inlet inside the cooling device 4, work for cleaning a honeycomb and a filter housed in the device main body of the cooling device 4, work for cleaning a peripheral region including each component inside the device or the honey comb and the filter, work for removing foreign matters that inhibit ventilation of the cool air inlet, and work for removing foreign matters existing in the peripheral region.

Further, hereinafter, various types of causes to be the origin of abnormality requiring expert maintenance inspection work to deal with are classified into "first-type cause", and various types of causes to be the origin of abnormality that can be dealt with general maintenance inspection work are classified into "second-type cause". Typically, "first-type cause" means that the cause is originated from breakdown of the cooling device, and "second-type cause" means that abnormality of the cooling device is the temporal cause, however, the "first-type cause" and the "second-type cause" are not limited to those.

In the cooling device management system 1 according to the embodiment, the management server 3 does not send a maintenance inspection request to the maintenance inspection service provider 15 but gives an instruction to the shop user U to perform the general maintenance inspection work, when the cause of the abnormality generated in the cooling device 4 is the second-type cause. For such actions, the cooling device management system 1 further includes a shop user terminal apparatus (first terminal apparatus) 10 and a related information acquiring apparatus (second terminal apparatus) 9 as devices provided in the shop 2.

Hereinafter, configurations of each component provided for the cooling device management system 1 will be described in detail.

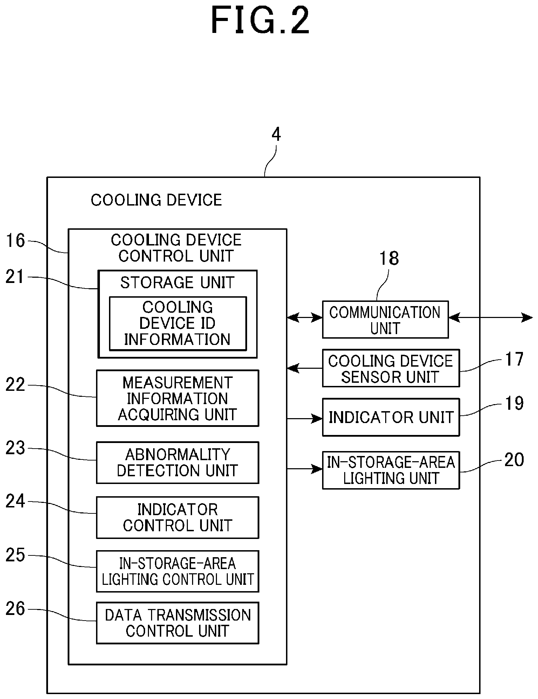

Fig. 2 is a block diagram showing a functional configuration of the cooling device 4.

The cooling device 4 includes a cooling device control unit 16, a cooling device sensor unit 17, a communication unit 18, an in-storage-area lighting unit 20, and an indicator unit 19.

The cooling device control unit 16 includes a computer having a processor such as a CPU or an MPU and a memory device such as a ROM and a RAM and controls each component of the cooling device 4.

The cooling device sensor unit 17 includes a single or a plurality of sensor (first sensor) and measures various kinds of information used for monitoring the operation state of the cooling device 4. This kind of information includes at least in-storage-area temperature information. Hereinafter, various kinds of information measured by the cooling device sensor unit 17 are referred to as "measurement information".

The communication unit 18 transmits and receives information to/from the shop apparatus 8 via the network 13, and includes a transceiver having a receiver circuit and a transmitter circuit.

The indicator unit 19 displays the operation state of the cooling device 4 and includes various kinds of lamps provided for the device main body of the cooling device 4, a display panel, and the like.

The in-storage-area lighting unit 20 illuminates inside the cooling device 4 and includes a plurality of lighting devices.

The cooling device control unit 16 functions as a storage unit 21, a measurement information acquiring unit 22, an abnormality detection unit 23, an indicator control unit 24, an in-storage-area lighting control unit 25, and a data transmission control unit 26 through execution of a program recorded in the memory device by the processor.

The storage unit 21 stores various kinds of information, and at least stores in advance cooling device ID information that uniquely identifies the own cooling device 4.

The measurement information acquiring unit 22 acquires the measurement information from the cooling device sensor unit 17 regularly at an appropriate interval.

The abnormality detection unit 23 detects abnormality in the actions of the cooling device 4 based on the measurement information. Specifically, for the physical quantity, physical property, characteristics, and the like provided by the measurement information, conditions to be determined as abnormal (for example, threshold value and numerical value range) are set in advance as abnormality determining information. The abnormality detection unit 23 detects abnormality every time the measurement information is acquired based on the measurement information and the abnormality determining information. Note that the abnormality detection unit 23 may be provided not for the cooling device 4 but for another apparatus such as the shop apparatus 8 or the management server 3.

The indicator control unit 24 controls the display of the indicator unit 19 based on the measurement information to display the state of the cooling device 4. Further, when abnormality is detected by the abnormality detection unit 23, the abnormal state is displayed on the indicator unit 19 for enabling the shop user U to recognize the abnormality.

The in-storage-area lighting control unit 25 controls flashing of each of the lighting devices of the in-storage-area lighting unit 20 and turns off the in-storage-area lighting unit 20 when abnormality is detected. This turning off makes it easy for the shop user U to easily identify the cooling device 4 having abnormality, even when there are a plurality of same-type cooling devices 4 provided in the shop 2. Note that the in-storage-area lighting control unit 25 may turn off and on the in-storage-area lighting unit 20 according to an instruction of the management server 3.

The data transmission control unit 26 adds the cooling device ID information and other appropriate information to the measurement information every time the measurement information acquired by the measurement information acquiring unit 22 is transmitted to the shop apparatus 8 and transmits such information as operation data D1 to the shop apparatus 8 via the communication unit 18. Further, when abnormality is detected by the abnormality detection unit 23, the data transmission control unit 26 adds the cooling device ID information and other appropriate information to an abnormality detection result, and transmits such result as alarm data D2 to the shop apparatus 8 via the communication unit 18. The abnormality detection result includes at least an error code indicating the abnormality.

As shown in Fig. 1, an ID transmitter 14 is provided for each of the cooling devices 4. The ID transmitter 14 is an apparatus or an article for transmitting the cooling device ID information of the cooling device 4 directly to the related information acquiring apparatus 9 from the cooling device 4 without using the network 13. As the ID transmitter 14, used is at least one selected from a display apparatus or a display article that transmits the cooling device ID by displaying a QR code (R) that is coded with cooling device ID information, a beacon transmitter that transmits the cooling device ID information by using beacons, and an optical ID transmitter that transmits the cooling device ID information as optical ID by flashing of an LED light source.

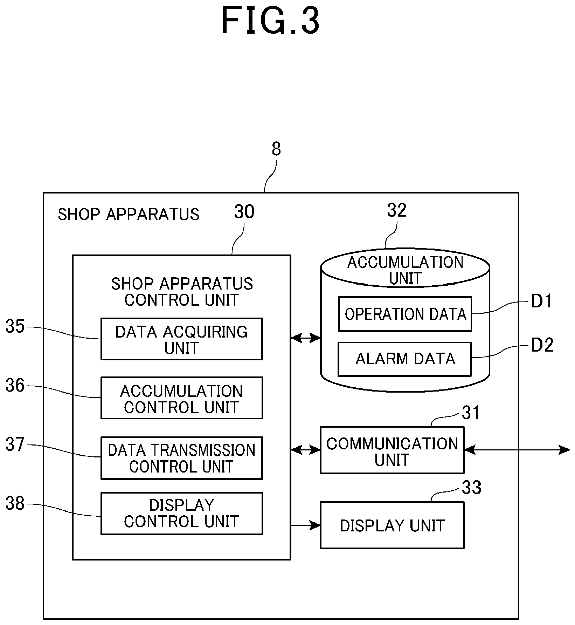

Fig. 3 is a block diagram showing a functional configuration of the shop apparatus 8.

The shop apparatus 3 includes a shop apparatus control unit 30, a communication unit 31, an accumulation unit 32, and a display unit 33.

The shop apparatus control unit 30 includes a computer having a processor such as a CPU or an MPU and a memory device such as a ROM and a RAM and controls each component of the shop apparatus 8.

The communication unit 31 communicates with the cooling devices 4 and the management server 3 via the network 13, and includes a transceiver having a receiver circuit and a transmitter circuit.

The accumulation unit 32 includes a data storage device such as an HDD or an SSD and accumulates various kinds of information.

The display unit 33 includes a display and displays various kinds of information.

Further, the shop apparatus control unit 30 functions as a data acquiring unit 35, an accumulation control unit 36, a data transmission control unit 37, and a display control unit 38 by execution of the program recorded in the memory device by the processor.

The data acquiring unit 35 acquires the operation data D1 and the alarm data D2 transmitted from each of the cooling devices 4 via the network 13.

The accumulation control unit 36 accumulates the operation data D1 and the alarm data D2 acquired by the data acquiring unit 35 in the accumulation unit 32.

The data transmission control unit 37 transmits the operation data D1 accumulated in the accumulation unit 32 to the management server 3 at an appropriate timing. Further, when the alarm data D2 is accumulated in the accumulation unit 32, the data transmission control unit 37 transmits the alarm data D2 to the management server 3 promptly from the timing of accumulation without delay.

The display control unit 38 controls display of the display unit 33. Further, when the alarm data D2 is acquired by the data acquiring unit 35, the display control unit 38 displays the abnormality indicated by the alarm data D2 on the display unit 33 for enabling the shop user U to recognize the abnormality.

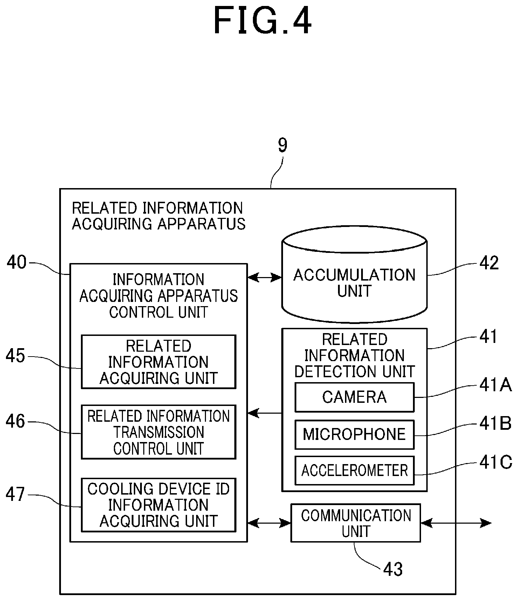

Fig. 4 is a block diagram showing a functional configuration of the related information acquiring apparatus 9.

The related information acquiring apparatus 9 is an apparatus that acquires the related information to be described later regarding the cooling devices 4 of the shop 2 in response to a request of the management server 3 and transmits such information to the management server 3, and includes an information acquiring apparatus control unit 40, a related information detection unit 41, an accumulation unit 42, and a communication unit 43.

The information acquiring apparatus control unit 40 includes a computer having a processor such as a CPU or an MPU and a memory device such as a ROM and a RAM and controls each component of the related information acquiring apparatus 9.

The related information detection unit 41 detects related information of the cooling devices 4 and includes various kinds of sensors (second sensors) for detection thereof.

The related information is the information relative to the cooling device 4, which is information other than the measurement information of the cooling device 4 and effective for identifying the cause when abnormality is generated in the cooling device 4 or for obtaining sure evidence for the predicted cause.

In the embodiment, captured image information acquired by capturing image of the cooling device 4, collected sound information acquired by collecting operation sound of the cooling device 4, vibration information of the compressor condensing the refrigerate are used as the related information. In order to detect such related information, the related information detection unit 41 includes a camera 41A having an imaging sensor for acquiring the captured image information, a microphone 41B for collecting the collected sound information, and an accelerometer 41C for detecting the vibration information.

The place where the camera 41A captures images as the captured image information may be each component such as the cool air outlet or the cool air inlet inside the device, each component such as an evaporator, a honeycomb, or a filter housed in the device main body of the cooling device 4, or the peripheral region of the cooling device including at least one of those components. The honeycomb and the filter are members that remove dust particles from the outside air taken into the cooling device 4. For example, the honeycomb is provided in the cool air discharge port part, and the filter is provided for the condenser.

The place where the microphone 41B acquires the collected sound information may be a fan of a heat exchanger, the compressor, or the like provided for the cooling device 4.

The place where the accelerometer 41C acquires the vibration information may be the compressor.

The accumulation unit 42 includes a data storage device such as an HDD or an SSD and accumulates various kinds of information.

The communication unit 43 communicates with the management server 3 via the network 13, and includes a transceiver having a receiver circuit and a transmitter circuit.

The information acquiring apparatus control unit 40 functions as a related information acquiring unit 45, a related information transmission control unit 46, and a cooling device ID information acquiring unit 47 by execution of the program recorded in the memory device by the processor.

When there is a request for acquiring the related information from the management server 3, the related information acquiring unit 45 controls the related information detection unit 45 to acquire the related information and accumulates the information in the accumulation unit 42.

The cooling device ID information acquiring unit 47 acquires the cooling device ID information transmitted by the ID transmitter 14 of the cooling device 4. That is, when the ID transmitter 14 displays a QR code, the cooling device ID information acquiring unit 47 reads out the QR code by the camera 41A to acquire the cooling device ID information. Further, when the ID transmitter 14 transmits a beacon, a beacon receiver is provided for the related information acquiring apparatus 8 and the beacon is received by the beacon receiver so that the cooling device ID information is acquired by the cooling device ID information acquiring unit 47. Further, when the ID transmitter 14 transmits the optical ID, the cooling device ID information acquiring unit 47 acquires the cooling device ID information by capturing flashing of the light by the camera 41A.

The related information transmission control unit 46 generates related information data D (see Fig. 10) that includes the related information acquired by the related information acquiring unit 45 and the cooling device ID information acquired by the cooling device ID information acquiring unit 47 and transmits such related information data D3 to the management server 3 from the communication unit 43 via the network 13.

Fig. 5 is a block diagram showing a functional configuration of the shop user terminal apparatus 10.

The shop user terminal apparatus 10 is an information communication terminal apparatus operated by the shop user U, and a portable mobile terminal such as a smartphone or a tablet PC is used as the shop user terminal apparatus 10.

The shop user terminal apparatus 10 acquires information regarding the cooling device 4 by communicating with the management server 3 and displays the information. As a piece of such information, included is a work instruction for giving an instruction to do general maintenance inspection work that can solve abnormality when the abnormality is generated in the cooling device 4. As described above, the general maintenance inspection work is a level of work that can be conducted by a person who does not have expertise that is same as those of the manufacturer, the maintenance inspection provider, and the like.

As shown in Fig. 5, the shop user terminal apparatus 10 includes a user terminal control unit 50, a communication unit 51, an accumulation unit 52, a display unit 53, and a work result detection unit 54.

The user terminal control unit 50 includes a computer having a processor such as a CPU or an MPU and a memory device such as a ROM and a RAM and controls each component of the shop user terminal apparatus 10.

The communication unit 51 communicates with the management server 3 via the network 13, and includes a transceiver having a receiver circuit and a transmitter circuit.

The accumulation unit 52 includes a data storage device such as an HDD or an SSD and accumulates various kinds of information.

The display unit 53 includes a display and displays various kinds of information such as the work instruction acquired from the management server 3.

The work result detection unit 54 detects the state of the cooling device 4 (referred to as "work result state") which is the result of the general maintenance inspection work conducted by the shop user U. The work result state detection data is accumulated in the accumulation unit 52. In the embodiment, the work result state is a state of the appearance of the cooling device 4, particularly a state of the appearance including the part where the general maintenance inspection work is conducted. The work result detection unit 54 is provided with a camera 54A for detecting such state, and captured images of the camera 54A are accumulated in the accumulation unit 52.

Further, the user terminal control unit 50 functions as a work implementation control unit 57 by execution of the program recorded in the memory device by the processor. The work implementation control unit 57 controls reception of work instructions from the management server 3, display of the work instructions, acquisition and accumulation of the work result states, and transmission of work report data D4 (see Fig. 10) to the management server 3. The work report data D4 is data notifying the result for the work instruction to the management server 3. When the work result state is acquired and accumulated, the work implementation control unit 57 generates the work report data D4 including the work result state and transmits the data D4 to the management server 3.

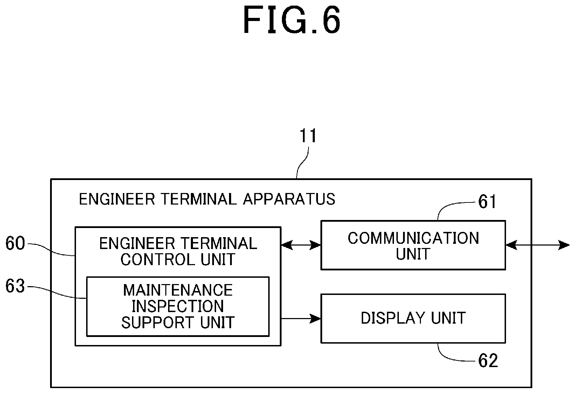

Fig. 6 is a block diagram showing a functional configuration of the engineer terminal apparatus 11.

The engineer terminal apparatus 11 includes an engineer terminal control unit 60, a communication unit 61, and a display unit 62, and is configured with a portable mobile terminal such as a notebook PC or a tablet PC.

The engineer terminal control unit 60 includes a computer having a processor such as a CPU or an MPU and a memory device such as a ROM and a RAM and controls each component of the engineer terminal apparatus 11.

The communication unit 61 communicates with the management server 3 via the network 13, and includes a transceiver having a receiver circuit and a transmitter circuit.

The display unit 62 includes a display and displays various kinds of information.

Further, the engineer terminal apparatus control unit 60 functions as a maintenance inspection support unit 63 by execution of the program recorded in the memory device by the processor.

The maintenance inspection support unit 63 provides various kinds of tools for supporting the maintenance inspection work conducted by the service engineer E. Such tools may be for viewing information regarding abnormality of the cooling device 4 as the subject of maintenance inspection work, viewing the history of the maintenance inspection work of the cooling device 4, viewing a service manual of the cooling device 4, and the like. The maintenance inspection support unit 63 communicates with the management server 3 as necessary to acquire appropriate data required for execution of the tools from the management server 3.

Fig. 7 is a block diagram showing a functional configuration of the management server 3. The management server 3 is configured with a server computer that includes a processor such as a CPU or an MPU, memory devices such as a ROM and a RAM, a storage device such as an HDD or an SDD, an interface circuit for connecting various kinds of peripheral devices, and a transceiver for communicating with other communication devices via the network 13. Such management server 3 functions as a server control unit 70, a communication unit 71, and an accumulation unit 72 as shown in Fig. 7 by execution of the program stored in the storage device by the processor.

The server control unit 70 controls each component of the management server 3, and the communication unit 71 transmits and receives information to/from other communication devices such as the shop apparatus 8. The accumulation unit 72 accumulates various kinds of information.

Further, the server control unit 70 functions as a data acquiring unit 76, a related information acquiring unit 77, a learning data collecting unit 78, a diagnosis processing unit 79, and a work result acquiring unit 80 by execution of the program.

The data acquiring unit 76 acquires the operation data D1 and the alarm data D2 transmitted from the shop apparatus 8 via the network 13 and accumulates the data in the accumulation unit 72.

In a diagnosis by the diagnosis processing unit 79, the related information acquiring unit 77 transmits related information acquiring instruction to the related information acquiring apparatus 9 as necessary, acquires the related information data D3 from the related information acquiring apparatus 9, and accumulates the data D3 in the accumulation unit 72.

The learning data collection unit 78 collects learning data used for making determination by using a learned model, and detail thereof will be described later.

When abnormality is generated in the cooling device 4, the diagnosis processing unit 79 executes diagnosis processing for solving the abnormality. In the diagnosis processing, the cause of the abnormality is identified. Then, when the cause is the first-type cause that requires the expert maintenance inspection work to deal with, the diagnosis processing unit 79 sends a maintenance inspection request to the maintenance inspection service provider 15 via the communication unit 71. In the meantime, when the cause is the second-type cause that can be dealt with the general maintenance inspection work, the diagnosis processing unit 79 sends a work request to the shop user terminal apparatus 10 to give an instruction to perform the general maintenance inspection work.

The work result acquiring unit 80 acquires the work report data D4 that shows the work result state from the work report transmitted from the shop user terminal apparatus 10. Then, the diagnosis processing unit 79 determines whether or not the maintenance inspection work is conducted appropriately based on the work report data D4.

Figs. 8 are tables showing examples of configuration of various kinds of data accumulated in the accumulation unit 72 of the management server 3.

Fig. 8A is a table showing a list of shop apparatuses in shops managed by the management server 3. The shop apparatus list includes shop IDs and shop apparatus IDs of the shop apparatuses 8. The management server 3 manages the information acquired from the shop apparatuses 8 in each of the shops based on the shop apparatus list. The shop apparatus list may be accumulated in advance in the accumulation unit 72 of the management server 3 in the initial setting or may be added by update.

Fig. 8B is a table showing a list of correspondence relation between the cooling devices managed by the shop apparatuses 8 and the related information acquiring apparatuses 9. This list includes the cooling device IDs of the cooling devices 4, IDs of the related information acquiring apparatuses 9 (for example, camera IDs in Fig. 8B), and coordinate information (four coordinates in Fig. 8B) of the cooling devices 4 in the information acquired by the related information acquiring apparatuses 9. Based on this list, the diagnosis processing unit 79 determines which cooling device 4 the related information acquired by the related information acquiring unit 77 from the related information acquiring apparatus 9 corresponds to and determines which part of the related information to use. For example, when the related information detection unit 41 is a camera, image information in a range surrounded by four points of the coordinate information out of the camera image is used as the related information corresponding to a specific cooling device.

Fig. 8C is a table showing a configuration of the operation data D1 acquired by the data acquiring unit 76 from the cooling device 4 via the shop apparatus 8. The operation data D1 includes the shop apparatus ID of the shop apparatus 8, the cooling device ID of the cooling device 4 in the shop apparatus, time information, and measurement information. The data corresponding to the cooling device ID is transmitted from the cooling device 4 itself and integrated with the data shown in Fig. 8C in the shop apparatus 8. Note that the shop apparatus ID may be added in the shop apparatus 8.

Fig. 8D is a table showing a configuration of the alarm data D2 acquired by the data acquiring unit 76 from the cooling device 4 via the shop apparatus 8. The alarm data D2 includes the shop apparatus ID of the shop apparatus 8, the cooling device ID of the cooling device 4 in the shop apparatus, time information, and an error code. Note that the shop apparatus ID may be added in the shop apparatus 8.

Fig. 8E is a table showing a configuration of the related information data D3 acquired by the related information acquiring unit 77 from the related information acquiring apparatus 9. The related information data D3 includes the shop ID, the ID of the related information acquiring apparatus 9 (for example, camera ID in Fig. 8E), and the related information (for example, camera captured image in Fig. 8E). The data corresponding to the ID of the apparatus itself is transmitted from the related information acquiring apparatus 9 and integrated with the data shown in Fig. 8E in the management server 3.

Fig. 8F is a table showing a configuration of the work report data D4 acquired by the work result acquiring unit 80 from the user terminal apparatus 10. The work report data D4 includes the shop apparatus ID of the shop apparatus 8, the cooling device ID of the cooling device 4 in the shop apparatus, time information at which the maintenance inspection work is conducted, and work information showing the work content of the maintenance inspection.

Next, actions regarding the maintenance inspection of the cooling device management system 1 will be described.

Fig. 9 is a sequence chart of the cooling device management system 1 in a case where no abnormality is generated in the cooling device 4.

In the cooling device management system 1, the cooling device 4 regularly generates the operation data D1 including the measurement information of that point and transmits the operation data D1 to the shop apparatus 8 every time the operation data D1 is generated. Upon receiving the operation data D1, the shop apparatus 8 promptly accumulates the data D1 in the accumulation unit 32. Then, the shop apparatus 8 collectively transmits the operation data D1 accumulated in the accumulation unit 32 to the management server 3 at an appropriate timing. Upon receiving the operation data D1 from the shop apparatus 8, the management server 3 accumulates the operation data D1 in the accumulation unit 72.

Fig. 10 is a sequence chart of the cooling device management system 1 when abnormality is generated in the cooling device 4.

When the abnormality detection unit 23 detects abnormality in the cooling device 4, the cooling device 4 transmits the alarm data D2 indicating generation of the abnormality to the shop apparatus 8. Upon receiving the alarm data D2, the shop apparatus 8 promptly transmits the alarm data D2 to the management server 3. Upon receiving the alarm data D2, the management server 3 executes the diagnosis processing.

Fig. 11 is a flowchart of the diagnosis processing.

In the diagnosis processing, the management server 3 executes cause identifying processing (step Sa1). The cause identifying processing is the processing for identifying the cause of abnormality generated in the cooling device 4. In the initial diagnosis processing where the abnormality is detected, the management server 3 tries to identify the cause based on the operation data D1 (at least the measurement information) of the cooling device 4. For example, the cause is identified based on the measurement information of the operation data D1 corresponding to the shop apparatus ID, the cooling device ID, and the time information (2018/1/1 00:01 in Fig. 8C and Fig. 8D) in the alarm data D2. Note that it is also possible to use the measurement information of a prescribed range (2018/1/1 00:00 to 00:02 in Fig. 8C and Fig. 8D) before and after the matching time information. When the cause cannot be identified (No in step Sa2), the management server 3 executes related information acquiring processing (step Sa8).

The related information acquiring processing is the processing for finding the cause of the abnormality of the cooling device 4 or for acquiring the related information for obtaining sure evidence for the cause from the related information acquiring apparatus 9. In this processing, as shown in Fig. 10, the management server 3 transmits a related information acquiring request for giving an instruction to the related information acquiring apparatus 9 to transmit the related information and receives the related information data D3 including the related information from the related information acquiring apparatus 9. Details of the related information acquiring processing will be described later.

Upon acquiring the related information from the related information data D3, the management server 3 again executes the cause identifying processing (step Sa1), and identifies the cause based on the operation data D1 and the related information. When identifying the cause, the management server 3 refers to Fig. 8A, Fig. 8B, and Fig. 8E to extract the related information data D3 that matches the shop apparatus ID, the cooling device ID, and the time information corresponding to the error code of the alarm data D2 and extracts the corresponding related information (image captured by the camera in Fig. 8E).

In the cause identifying processing, it is identified as a result of the identifying processing whether it is highly probable that the cause of the abnormality is originated from the first-type cause, it is highly probable that the cause of the abnormality is originated from the second-type cause, or it requires follow-up observation.

The follow-up observation is a mode of an abnormality dealing method with which it is waited for specific time without conducting maintenance inspection work for the abnormality to see whether or not the abnormality is continuously detected even at the point after the prescribed time has passed. For example, when leaving the device open for a long time for putting in and out articles in inventory or the like is the cause of the abnormality, the abnormality is solved when the putting in and out work ends.

As described, when it is highly probable that the abnormality is solved as time passes without conducting maintenance inspection work, not the maintenance inspection work but follow-up observation is identified as the result of the identifying processing in the cause identifying processing.

Note that details of the cause identifying processing will be described later.

When the cause is identified (YES in step Sa2) and it is highly probable that the cause is the first-type cause (YES in step Sa3), the management server 3 sends a maintenance inspection request to the maintenance inspection service provider 15 (step Sa4).

Thereby, as shown in Fig. 10, the maintenance inspection request is received by the contractor terminal apparatus 12. Thereafter, the service engineer E visits the shop 2 and performs expert maintenance inspection work so as to solve the abnormality of the cooling device 4. After performing the expert maintenance inspection work, the management server 3 receives a work completion report indicating so from the contractor terminal apparatus 12, thereby managing the completion of the expert maintenance inspection work. In order to support the work of the service engineer E, the management server 3 also transmits the information of the first-type cause identified in the cause identifying processing and the information of the expert maintenance inspection work for dealing with the first-type cause at the time of sending the maintenance inspection request.

In the meantime, when it is determined in step Sa2 that the cause is highly probable to be the second-type cause (YES in step Sa5), the management server 3 transmits a work request for giving an instruction to perform general maintenance inspection work for solving the second-type cause to the shop user terminal apparatus 10 (step Sa6). At the time of transmitting the work request, the management server 3 also transmits, to the shop user terminal apparatus 10, shop user work support information (for example, content and work procedure of the general maintenance inspection work) for supporting the work conducted by the shop user U. The shop user U performs the general maintenance inspection work while referring to the shop user work support information displayed on the display screen of the display unit 53 of the shop user terminal apparatus 10. Thereafter, upon finishing the general maintenance inspection work, the shop user U transmits the work report data D4 to the management server 3 as shown in Fig. 10. Then, the management server 3 determines whether or not the general maintenance inspection work is appropriately achieved based on the work report data D4. When it is determined that the general maintenance inspection work is not conducted appropriately, the management server 3 again transmits a work request to have the shop user E perform the general maintenance inspection work so as to appropriately complete the work.

Further, when the result of the identifying processing acquired in determination of step Sa2 is neither the first-type cause nor the second-type case, that is, the follow-up observation (No in both steps Sa3 and Sa5), the management server 3 waits for a certain time that is predetermined as a follow-up observation period (step Sa7). Thereafter, when the alarm data D2 is still received from the shop apparatus 8, the management server 3 performs the diagnosis processing again.

When the cause cannot still be identified by the diagnosis processing as a result of performing the cause identifying processing for an appropriate number of times, the management server 3 sends a maintenance inspection request to the maintenance inspection service provider 15.

Fig. 12 is a flowchart of the related information acquiring processing described above.

In the related information acquiring processing, the management server 3 transmits a related information acquiring instruction for giving an instruction to the related information acquiring apparatus 9 to acquire and transmit the related information via the communication unit 71 (step Sb1). Thereafter, the management server 3 receives the related information data D3 transmitted from the related information acquiring apparatus 9 (step Sb2).

Note here that a plurality of same-type cooling devices 4 are provided in the shop 2, so that it is highly probable that the related information acquiring apparatus 9 acquires the related information of the cooling device 4 that is not the cooling device 4 having abnormality. Thus, the management server 3 determines whether or not the cooling device ID information included in the alarm data D2 acquired from the shop apparatus 8 matches the cooling device ID information included in the related information data D3 acquired from the related information acquiring apparatus 9 (step Sb3).

When both of them do not match (NO in step Sb3), the management server 3 transmits a related information acquiring instruction again to the related information acquiring apparatus 9 (step Sb4). At this time, the management server 3 also transmits cooling device identification information (for example, cooling device ID information included in the alarm data D2) which enables the related information acquiring apparatus 9 to identify the cooling device 4 having the abnormality. According to the related information acquiring instruction transmitted again, the related information acquiring apparatus 9 is notified that the cooling device 4 whose related information is acquired is not the cooling device 4 having the abnormality. Then, by acquiring the related information of the cooling device 4 corresponding to the cooling device identification information by the related information acquiring apparatus 9, the related information of the cooling device 4 having the abnormality can be acquired securely. Thereby, it is possible to prevent the related information of the cooling device 4 not relevant to the abnormality from being used when the management server 3 makes determination by using the related information.

When both pieces of cooling device ID information do not match (NO in step Sb3), the management server 3 may give an instruction directly to the cooling device 4 or via the shop apparatus 8 to turn off the in-storage-area lighting of the cooling device 4.

Thereby, by identifying the cooling device 4 with the light being turned off by the image processing or the like performed by the related information acquiring apparatus 9, the related information acquiring apparatus 9 can accurately identify the cooling device 4 whose related information to be acquired.

Further, heat generated in the in-storage-area lighting unit 20 can be suppressed by turning off the in-storage-area lighting, which can contribute to suppressing an abnormal increase in the in-storage-area temperature.

Next, the cause identifying processing of the diagnosis processing will be described in detail.

In the embodiment, an artificial intelligence technology is used for identifying the cause of abnormality.

Specifically, when the operation data D1 or the operation data D1 and the related information is inputted as input data, each of learned models 81 that are a first-type cause determining learned model that outputs a matching degree of the cause of abnormality with respect to the first-type cause, a second-type cause determining learned model that outputs a matching degree of the cause of abnormality with respect to the second-type cause, and a follow-up observation determining learned model that outputs a matching degree of the cause with respect to the follow-up observation are generated, and those models 81 are stored in the accumulation unit 72. For generating those learned models 81, an appropriate method in the field of artificial intelligence technologies can be used.

Further, in Fig. 7, the learning data collection unit 78 collects learning data used for reinforcement learning of the learned models 81 from external systems, various kinds of devices, record of the maintenance inspection work conducted by the maintenance inspection service provider 15, and the like. Further, when new learning data is acquired, the management server 3 executes the reinforcement learning of the learned models 81 at appropriate timings. Thereby, accuracy of the determination using the learned models 81 can be increased. For example, in making the determination, an AI technology such as machine learning or deep learning is used.

Fig. 13 is a flowchart of cause identifying processing using determination made by using such learned models.

In the cause identifying processing, the management server 3 generates input data from the operation data D1 in a case of determination processing of the first time and generates input data from the operation data D1 and the related information in a case of determination processing of the second time and thereafter (step Sc1).

Then, the management server 3 reads out, from the accumulation unit 72, each of the learned models 81 for determining the first-type cause, for determining the second-type case, and for determining the follow-up observation (step Sc2). Then, the management server 3 inputs the input data to each of the learned models 81 and acquires the matching degrees as the output from each thereof (step Sc3).

Then, when the matching degree acquired from the first-type cause determining learned model 81 is equal to or more than a first threshold value (YES in step Sc4), the management server 3 identifies the cause of the abnormality as the first-type cause (cause requiring expert maintenance inspection work) (step Sc5).

Further, when the matching degree acquired from the first-type cause determining learned model 81 is less than the first threshold value (NO in step Sc4) and the matching degree acquired from the second-type cause determining learned model 81 is equal to or more than a second threshold value (YES in step Sc6), the management server 3 identifies the cause of the abnormality as the second-type cause (cause that can be dealt with general maintenance inspection work) (step Sc7).

Furthermore, when the matching degree acquired from the second-type cause determining learned model 81 isless than the second threshold value (NO in step Sc6) and the matching degree acquired from the follow-up observation determining learned model 81 is equal to or more than a third threshold value (YES in step Sc8), the management server 3 determines the identified result as requiring the follow-up observation (step Sc9).

Then, when the matching degree acquired from the follow-up observation determining learned model 81 is less than the third threshold value (NO in step Sc8), the management server 3 determines the identified result as being impossible to identify the cause (step Sc10).

Because the learned models 81 are used for identifying the cause of the abnormality, by continuing the reinforcement learning of the learned models 81, it is possible to reduce such cases where the cause cannot be identified.

With the embodiment, following effects can be achieved.

In the embodiment, the management server 3 determines whether or not expertise for the cooling device 4 is required for dealing with the cause of the abnormality of the cooling device 4 based on the operation data D1 (measurement information) of the cooling device 4 and, when determined that the expertise is not required, transmits an instruction to the shop user terminal apparatus 10 to conduct the general maintenance work for dealing with the cause.

Thereby, when abnormality is generated in the cooling device 4, only the instruction to conduct the general maintenance work that can be performed without expertise is given to the shop user U but no instruction of the expert maintenance inspection work requiring expertise is given.

Therefore, even when the shop user U has no expertise regarding the cooling device 4 and inexperienced in doing the maintenance, it is possible to perform appropriate work for the cause of the abnormality.

In addition, the shop user U can solve the abnormality that can be dealt with the general maintenance inspection work without requesting the maintenance inspection service provider 15 to do the work. Thereby, the shop 2 side can suppress the cost to be payed to the maintenance inspection service provider 15, while the maintenance inspection service provider 15 does not need to spend the time for general maintenance inspection work so that it is possible to focus on sophisticated maintenance inspection work that requires expertise.

In the embodiment, the management server 3 determines whether or not expertise for the cooling device 4 is required for dealing with the cause of the abnormality of the cooling device 4 based on the operation data D1 and the related information data D3, so that it is possible to make determination accurately.

In the embodiment, when it is not possible to determine whether or not expertise for the cooling device 4 is required for dealing with the cause of the abnormality of the cooling device 4 based on the operation data D1, the management server 3 acquires the related information data D3 from the related information acquiring apparatus 9. Then, the management server 3 determines whether or not expertise for the cooling device 4 is required for dealing with the cause of the abnormality of the cooling device 4 based on the operation data D1 and the related information data D3.

This makes it possible to suppress the number of times the management server 3 gives an instruction to the related information acquiring apparatus 9 to acquire the related information.

In the embodiment, the in-storage-area lighting of the cooling device 4 is turned off when abnormality is generated in the cooling device 4, thereby making it easier to identify the cooling device 4 having the abnormality.

In the embodiment, when it is determined that expertise regarding the cooling device 4 is required for dealing with the abnormality of the cooling device 4, the management server 3 transmits a maintenance inspection request to the maintenance inspection service provider 15.

Thereby, when expertise regarding the cooling device 4 is required for dealing with the abnormality of the cooling device 4, it is possible to have not the shop user U but the service engineer E of the maintenance inspection service provider 15 to conduct appropriate work.

In the embodiment, the management server 3 compares the cooling device ID information acquired by the related information acquiring apparatus 9 from the ID transmitter 14 that is provided for the cooling device 4 with the cooling device ID information acquired from the cooling device 4 via the network 13, and determines whether or not the cooling device 4 whose related information data D3 is acquired by the related information acquiring apparatus 9 is the cooling device 4 having the abnormality.

This makes it possible to prevent the related information of the cooling device 4 having no abnormality from being used for making determination, when the management server 3 makes determination using related information.

In the embodiment, the ID transmitter 14 transmits the cooling device ID information by using at least one of a QR code, a beacon, and an optical ID, so that it is possible to transmit the cooling device ID information to the related information acquiring apparatus 9 by a method other than having communication via the network.

In the embodiment, when the cooling device ID information acquired by the related information acquiring apparatus 9 from the ID transmitter 14 that is provided for the cooling device 4 does not match the cooling device ID information acquired from the cooling device 4 via the network 13, the management server 3 notifies the related information acquiring apparatus 9 via the network 13 that the cooling device 4 whose related information is acquired is not the cooling device 4 having abnormality.

Thereby, the related information acquiring apparatus 9 can reacquire the related information when the related information acquiring apparatus 9 has acquired the related information from a wrong cooling device 4.

In the embodiment, when the cooling device ID information acquired by the related information acquiring apparatus 9 from the ID transmitter 14 that is provided for the cooling device 4 does not match the cooling device ID information acquired from the cooling device 4 via the network 13, the management server 3 transmits the cooling device identification information for identifying the cooling device 4 having the abnormality to the related information acquiring apparatus 9.

Thereby, the related information acquiring apparatus 9 can securely acquire the related information from the cooling device 4 having the abnormality.

In the embodiment, the related information is captured image information of the cool air outlet, the cool air inlet, the evaporator, the honeycomb, the filter of the cooling device 4, or the peripheral region including at least one of those components captured by the camera 41A.

By acquiring such related information, it is possible to accurately identify whether or not the cause of the abnormality is the cause that requires expertise regarding the cooling device 4.

In the embodiment, the work for dealing with the cause that requires no expertise regarding the cooling device 4 (general maintenance inspection work) is defined as cleaning of at least one of the cool air outlet, the honeycomb, the filter, and the peripheral region or removal of foreign matters at least from the cool air inlet or the peripheral region.

This makes it possible to have the shop user U perform only the work that suits the shop user U who has no expertise regarding the cooling device 4 and is inexperienced in doing the maintenance thereof.

In the embodiment, the related information is defined as the collected sound information, of the fan or the compressor of the cooling device 4, collected by the microphone 41B.

By acquiring such related information, it is possible to identify whether or not the cause of the abnormality is the abnormality of the fan or the compressor, which is also the cause that requires expertise regarding the cooling device 4 to deal with.

In the embodiment, the related information is defined as the vibration information of the compressor of the cooling device 4 acquired by the accelerometer 41C.

By acquiring such related information, it is possible to identify whether or not the cause of the abnormality is the abnormality of the compressor, which is also the cause that requires expertise regarding the cooling device 4 to deal with.

In the embodiment, a monitoring apparatus as an example of an information acquiring apparatus placed in the shop 2 where the cooling devices 4 are disposed is used as the related information acquiring apparatus 9, and a portable mobile terminal is used as the shop user terminal apparatus 10.

Thereby, the management server 3 can acquire the related information without having the shop user U do any work, so that the number of times of work the shop user U conducts can be decreased. Further, because the shop user terminal apparatus 10 is the portable mobile terminal, the shop user U can conduct general maintenance inspection while operating the shop user terminal apparatus 10 near the cooling device 4 as the work subject.

Note that the embodiment described above is simply an example of a mode of the present invention, and any modification and application are possible without departing from the scope of the spirit of the present invention.

### (Modification Example 1)

The related information acquiring apparatus 9 is not limited to be provided in the shop 2 but may be provided for each of the cooling devices 4. Thereby, the related information of each of the cooling devices 4 can be securely acquired.

### (Modification Example 2)

The shop user terminal apparatus 10 may also function as the related information acquiring apparatus 9.

That is, the shop user terminal apparatus 10 acquires a related information acquiring instruction from the management server 3, and displays the instruction on the display unit for presenting to the shop user U.

In such case, the management server 3 transmits the work procedure for acquiring the related information along with the related information acquiring instruction to the shop user terminal apparatus 10 to support the shop user U for acquiring the related information. Further, the in-storage-area lighting of the cooling device 4 is controlled to be turned off by the cooling device 4 or the management server 3 when there is abnormality generated in the cooling device 4, so that the shop user U can easily identify the cooling device 4 having the abnormality.

Then, when the shop user U completes the related information acquiring work, the shop user terminal apparatus 10 transmits the related information data D3 to the management server 3 via the network 13.

Assuming that the shop user U transmits the related information of a wrong cooling device 4 to the management server 3, it is transmitted so to the shop user terminal apparatus 10 along with the cooling device identification information by the related information acquiring processing. As the cooling device identification information, used may be model name or model number of the cooling device 4 having the abnormality, and placed position thereof in the shop 2, for example. Thereby, the management server 3 can securely acquire the necessary relevant information by having the shop user U reacquire the related information of the cooling device 4 having the abnormality.

With Modification Example 2, the shop user terminal apparatus 10 is configured to also function as the related information acquiring apparatus 9 such that the shop user terminal apparatus 10 and the related information acquiring apparatus 9 are configured as the one and same apparatus, so that it is possible to suppress the cost for the apparatuses of the cooling device management system 1.

Further, because the shop user terminal apparatus 10 is a portable mobile terminal, the shop user U can carry the shop user terminal apparatus 10 to the cooling device 4 having the abnormality regardless of the disposed places of each of the cooling devices 4 and securely acquire the related information from the subject cooling device 4.

### (Modification Example 3)

In the configuration in which the shop user terminal apparatus 10 also functions as the related information acquiring apparatus 9, the shop user terminal apparatus 10 may execute the cause identifying processing described above instead of the management server 3 based on the operation data D1 accumulated in the management server 3 or the shop apparatus 8 or based on the operation data D1 and the related information.

Then, in a case where no expertise is required for dealing with the cause of the abnormality, the shop user terminal apparatus 10 displays general maintenance inspection work for dealing with the cause on the display unit 53. Inversely, in a case where expertise is required for dealing with the cause of the abnormality, the shop user terminal apparatus 10 transmits a maintenance inspection request to the maintenance inspection service provider 15 or displays a screen on the display unit 53 for encouraging the shop user U to make a maintenance inspection request to the maintenance inspection service provider 15.

As described, through executing the cause identifying processing by the shop user terminal apparatus 10, it is possible to promptly identify and deal with the cause when the shop user U realizes that the abnormality is generated in the cooling device 4.

### (Modification Example 4)

Not limited to the case of the embodiment described above where each of the cooling devices 4 detects abnormality generated in the device itself, the shop apparatus 8 or the management server 3 may detect abnormality based on the operation data D1. In such case, publicly or generally known appropriate techniques may be used as the method for detecting the abnormality based on the operation data D1.

### (Modification Example 5)

Not limited to the case of the embodiment described above where the management server 3 acquires the operation data D1 of each of the cooling devices 4 from the shop apparatus 8, the operation data D1 may be directly acquired from each of the cooling devices 4 via the network 13.

### (Modification Example 6)

In the embodiment, it is possible to configure the cooling device management system 1 to be able to perform remote control of the operation control parameter of the cooling devices 4 by the management server 3 via the network 13 and, when abnormality is generated in the cooling device 4, to determine by the management server 3 with the cause identifying processing whether or not the cause of the abnormality can be dealt with by remote control.

Fig. 14 is a flowchart of the cause identifying processing according to Modification Example 6. Note that same reference signs are applied to the steps in Fig. 14 same as those of Fig. 13, and explanations thereof are omitted.

In Modification Example 6, the learned models 81 of the management server 3 include a remote controllable cause determining learned model that outputs a matching degree of the cause of abnormality with respect to the cause that can be dealt with by remote control.

An example of such type of abnormality may be in-storage-area abnormal temperature caused by formation of frost in the evaporator of the cooling device 4. The in-storage-area abnormal temperature can be accurately determined based on in-storage-area temperature information included in the measurement information and the related information that is a captured image of the evaporator of the cooling device 4 and can be solved through remote control of the operation control parameter of the cooling device 4 by the management server 3 via the network 13 to have the cooling device 4 execute a defrosting operation.

Further, in the cause identifying processing according to Modification Example 6, it is determined in step Sd1 of Fig. 14 whether or not the matching degree acquired from the remote controllable cause determining learned model is equal to or more than a fourth threshold value and, when determined as being equal to or more than the fourth threshold value (YES in step Sd1), the management server 3 performs remote control of the operation control parameter via the network 13 to solve the abnormality (step Sd2).

With Modification Example 6, it is possible to appropriately deal with the abnormality that can be dealt with by remote control of the cooling device 4 (for example, in-storage-area abnormal temperature caused by formation of frost) by performing the remote control of the cooling device 4 (for example, defrosting) without having the shop user U and the maintenance inspection service provider 15 perform the work.

### (Other Modification Examples)

The functional blocks shown in Fig. 1 to Fig. 7 are schematic views in which structural elements are classified according to the main processing content to enable easy understanding of the present invention, and the structural elements may be classified into a greater number of structural elements according to the processing contents. Further, it is also possible to classify a single structural element to execute still greater kinds of processing.

Each of the control units in Fig. 1 to Fig. 7 may be executed by a single piece of hardware or may be executed by a plurality of pieces of hardware. Further, the processing of each of the structural elements may be achieved by a single program or may be achieved by a plurality of programs.

The management server 3 may be configured with a computer system formed with a plurality of server computers, and each of the server computers may achieve various kinds of functions shown in Fig. 7 in cooperation.

### Industrial Applicability

As described above, the maintenance inspection method, the maintenance inspection system, and the information terminal according to the present invention are capable of preventing the user from inappropriately dealing with abnormality generated in cooling devices, so that it is possible to be applied to various kinds of usages related to maintenance of the cooling devices.

### Reference Signs List

- 1: Cooling device management system (maintenance inspection system)
- 2: Shop
- 3: Management server (computer)
- 4: Cooling device
- 8: Shop apparatus
- 9: Related information acquiring apparatus (second terminal apparatus)
- 10: Shop user terminal apparatus (first terminal apparatus)
- 13: Network
- 14: ID transmitter
- 15: Maintenance inspection service provider
- 17: Cooling device sensor unit (first sensor)
- 20: In-storage-area lighting unit
- 23: Abnormality detection unit
- 41: Related information detection unit (second sensor)
- 41A: Camera
- 41B: Microphone
- 41C: Accelerometer
- 54: Work result detection unit
- 79: Diagnosis processing unit
- D1: Operation data
- D2: Alarm data
- D3: Related information data
- D4: Work report data
- U: Shop user (user)

## Claims

1. A maintenance inspection method used in a maintenance inspection system (1) which is connected, via a network (13), to cooling devices (4) each including a first sensor (17) that acquires measurement information including at least in-storage-area temperature information, to a first terminal apparatus (10) displaying information of the cooling devices, and to a second terminal apparatus (9) including a second sensor (41) that acquires information from the cooling devices, and which conducts a maintenance inspection of the cooling devices by using a computer (3), the maintenance inspection method **characterized by** comprising:
determining whether or not a cause of abnormality generated in the cooling device is breakdown of the cooling device or a temporal cause based on the in-storage-area temperature information, of the cooling device, acquired from the cooling device via the network and related information, regarding the cooling device, different from the in-storage-area temperature information, of the cooling device, acquired from the second terminal apparatus via the network; and when determined as the temporal cause, providing, for the first terminal apparatus, a screen display of work for solving the temporal cause via the network.

2. The maintenance inspection method according to claim 1, comprising providing, for the first terminal apparatus, a screen display for encouraging acquisition of the related information, when it is not possible to identify whether the cause of the abnormality of the cooling device is the breakdown of the cooling device or the temporal cause based on the in-storage-area temperature information acquired from the cooling device via the network.

3. The maintenance inspection method according to claim 1 or 2, comprising turning off an in-storage-area lighting of the cooling device when the abnormality is generated in the cooling device.

4. The maintenance inspection method according to any one of claims 1 to 3, comprising, when determined that a cause of an increase in in-storage-area temperature of the cooling device is the breakdown of the cooling device, transmitting a request for dealing with the abnormality to a contractor that provides a maintenance inspection service via the network.

5. The maintenance inspection method according to claim 1, wherein each of the cooling devices comprises an ID transmitter that transmits ID information of the respective cooling device to the second terminal apparatus without using the network, the maintenance inspection method comprising:
comparing the ID information acquired by the second terminal apparatus from the ID transmitter with ID information acquired from the cooling device via the network; and determining whether or not the cooling device whose related information is acquired by the second terminal apparatus is the cooling device having the abnormality.

6. The maintenance inspection method according to claim 5, wherein the ID transmitter transmits the ID information by at least one of a QR code, a beacon, and an optical ID.

7. The maintenance inspection method according to claim 5 or 6, comprising, when the ID information acquired by the second terminal apparatus from the ID transmitter does not match the ID information acquired from the cooling device via the network, transmitting to the first terminal apparatus or the second terminal apparatus that the cooling device whose related information is acquired by the second terminal apparatus is not the cooling device having the abnormality.

8. The maintenance inspection method according to any one of claims 5 to 7, comprising, when the ID information acquired by the second terminal apparatus from the ID transmitter does not match the ID information acquired from the cooling device via the network, transmitting information for identifying the cooling device having the abnormality to the first terminal apparatus or the second terminal apparatus via the network.

9. The maintenance inspection method according to any one of claims 1 to 8, wherein the related information is captured image information, of a cool air outlet, a cool air inlet, an evaporator, a honeycomb, a filter of the cooling device, or a peripheral region including at least one of those components, captured by a camera.

10. The maintenance inspection method according to claim 9, wherein work for solving the temporal cause is cleaning of at least one of the cool air outlet, the honeycomb, the filter, and the peripheral region or removal of foreign matters at least from one of the cool air inlet and the peripheral region.

11. The maintenance inspection method according to any one of claims 1 to 8, wherein the related information acquired from the second terminal apparatus is collected sound information, of a fan or a compressor of the cooling device, collected by a microphone.

12. The maintenance inspection method according to any one of claims 1 to 8, wherein the related information acquired from the second terminal apparatus is vibration information, of a compressor of the cooling device, acquired by an accelerometer.

13. The maintenance inspection method according to claim 1, comprising, when determined that the cause of the abnormality of the cooling device is formation of frost in an evaporator based on the in-storage-area temperature information, of the cooling device, acquired from the cooling device and a captured image, of the evaporator of the cooling device, captured by a camera, acquired from the second terminal apparatus, causing the cooling device to execute defrosting of the evaporator.

14. The maintenance inspection method according to any one of claims 1 to 13, wherein:
the first terminal apparatus is a portable mobile terminal; and
the second terminal apparatus is an information acquiring apparatus provided in a shop where the cooling devices are disposed or provided for each of the cooling devices.

15. The maintenance inspection method according to any one of claims 1 to 13, wherein the first terminal apparatus and the second terminal apparatus are one and same portable mobile terminal.

16. A maintenance inspection system which is connected, via a network (13), to cooling devices (4) each including a first sensor (17) that acquires measurement information including at least in-storage-area temperature information, to a first terminal apparatus (10) displaying information of the cooling devices, and to a second terminal apparatus (9) including a second sensor (41) that acquires information from the cooling devices, and which conducts maintenance inspection of the cooling device by using a computer (3), **characterized in that**
whether or not a cause of abnormality of the cooling device is breakdown of the cooling device or a temporal cause is determined based on the in-storage-area temperature information, of the cooling device, acquired from the cooling device via the network and related information, regarding the cooling device, different from the in-storage-area temperature information, of the cooling device, acquired from the second terminal apparatus via the network; and when determined as the temporal cause, a screen display of work for solving the temporal cause is provided for the first terminal apparatus via the network.

17. An information terminal used in the maintenance inspection system of claim 16.
